# FASCICULE DE BREVET EUROPEEN

(11) **EP 2 856 919 B1**
(45) Date de publication et mention de la délivrance du brevet: **07.09.2016**
(21) Numéro de dépôt: 14185973.6
(22) Date de dépôt: 23.09.2014
(51) Int. Cl.: A47J 43/046, A47J 43/07

(54) **Accessoire pour découper des aliments comportant plusieurs outils de coupe secondaire**
Zubehör zum Schneiden von Lebensmitteln, das mehrere Werkzeuge für den Nachschnitt umfasst
Accessory for cutting food comprising a plurality of secondary cutting tools

(30) Priorité: 23.09.2013 FR 1359130
(43) Date de publication de la demande: 08.04.2015
(73) Titulaire: SEB S.A., 69130 Ecully (FR)
(72) Inventeur: Astegno, Jean-Paul, 64420 Espoey (FR); Charles, Patrick, 65290 Louey (FR); Lacourpaille, Gérard, 65380 Ossun (FR); Bessonnet, Dominique, 64420 Artigueloutan (FR)
(74) Mandataire: Cémeli, Eric Philippe Laurent

(56) Documents cités:
- FR-A1- 2 872 399
- US-A1- 2004 060 414

## Description

La présente invention concerne le domaine technique des appareils ménagers motorisés utilisés pour découper des aliments, notamment en tranches, en filaments ou en cubes, par un mouvement de rotation d'un outil de coupe. Dans une application préférée mais non strictement nécessaire, l'invention se rapporte à un accessoire de découpe d'aliments destiné à être adapté de manière amovible sur un boîtier d'entraînement motorisé.

Le document US 2010/154660 A1 divulgue un accessoire de découpe d'aliments en cubes comprenant une lame de coupe rotative pressant la tranche d'aliment découpée contre une grille de coupe, pour obtenir des cubes. Cet accessoire comporte par ailleurs une autre grille de coupe pouvant être logée à l'intérieur de l'enceinte de travail. Toutefois les deux grilles de coupe sont logées à l'intérieur de l'enceinte de travail. Ainsi la grille de coupe non utilisée reste exposée aux projections d'aliments découpés. Une telle réalisation apparaît peu ergonomique.

Un objet de l'invention est de proposer un accessoire de découpe d'aliments comprenant un outil de coupe primaire mobile en rotation et au moins deux outils de coupe secondaire fixes interchangeables, dans lequel le ou au moins l'un des outils de coupe secondaire non utilisés peut être protégé des projections d'aliments découpés.

Un autre objet de l'invention est de proposer un accessoire de découpe d'aliments comprenant un outil de coupe primaire mobile en rotation et au moins deux outils de coupe secondaire fixes interchangeables, dans lequel la manipulation des outils de coupe secondaire est facilitée.

Un autre objet de l'invention est de proposer un appareil électroménager de préparation culinaire comportant un boîtier d'entraînement motorisé et un accessoire de découpe d'aliments amovible comprenant un outil de coupe primaire mobile en rotation et au moins deux outils de coupe secondaire fixes interchangeables, dans lequel le ou au moins l'un des outils de coupe secondaire non utilisés peut être protégé des projections d'aliments découpés.

Un autre objet de l'invention est de proposer un appareil électroménager de préparation culinaire comportant un boîtier d'entraînement motorisé et un accessoire de découpe d'aliments amovible comprenant un outil de coupe primaire mobile en rotation et au moins deux outils de coupe secondaire fixes interchangeables, dans lequel la manipulation des outils de coupe secondaire est facilitée.

Ces objets sont atteints avec un accessoire de découpe d'aliments comprenant :
- un outil de coupe primaire rotatif,
- au moins deux outils de coupe secondaire fixes interchangeables,
- une platine qui comprend un fond pourvu d'un siège de réception de l'outil de coupe primaire mobile en rotation selon un axe de rotation ainsi que d'une fenêtre de coupe dans laquelle est disposé l'un des outils de coupe secondaire, la platine délimitant en partie une chambre de travail ouverte à l'opposé du fond,
- un couvercle comprenant une goulotte d'introduction des aliments à découper située sensiblement en regard de la fenêtre de coupe,
- un carter définissant avec la platine au moins un logement de rangement pour l'un des outils de coupe secondaire,
- des moyens d'entraînement en rotation de l'outil de coupe primaire,
du fait que la platine comprend un conduit d'évacuation des aliments découpés raccordé à la fenêtre de coupe et s'étendant à l'extérieur de la chambre de travail et du carter. La chambre de travail est délimitée essentiellement par la platine et le couvercle. Les aliments découpés à l'intérieur de la chambre de travail sont évacués par le conduit. Le raccordement du conduit à la fenêtre de coupe permet une évacuation par gravité des aliments découpés, sans nécessiter l'utilisation d'un dispositif d'éjection mobile tel que par exemple un éjecteur rotatif. Le nettoyage de l'accessoire de découpe d'aliments concerne principalement les outils de coupe, le couvercle et la platine. L'espace formé entre la platine et le carter n'est pas exposé aux projections d'aliments découpés et convient particulièrement pour ranger le ou les outils de coupe secondaire non utilisés.

Selon une caractéristique de l'invention, le conduit présente une extrémité libre distante d'une longueur supérieure ou égale à 100 mm à partir de la fenêtre de coupe. Une telle hauteur de conduit permet de rendre l'accès par le conduit à la fenêtre de coupe difficile afin de réduire les risques de blessures.

Selon une autre caractéristique de l'invention, le conduit possède une section dont la moyenne des dimensions maximale et minimale est au plus égale à 65,5 mm, et/ou dont la dimension maximale est au plus égale à 76 mm. Une telle dimension vise également à réduire les risques de blessure lors de l'usage de l'accessoire.

Selon une autre caractéristique de l'invention, le conduit s'étend selon un axe longitudinal qui forme un angle aigu non nul avec l'axe de rotation. Une telle configuration permet d'éloigner l'extrémité libre du conduit de l'axe de rotation de manière à faciliter le placement d'un récipient destiné à recueillir les aliments découpés sous l'extrémité libre du conduit.

Selon une variante de cette caractéristique, l'angle aigu présente une valeur comprise entre 20° et 50°.

Selon une autre caractéristique de l'invention, le conduit possède une section décroissante depuis la fenêtre de coupe jusqu'à son extrémité libre.

Selon une forme de réalisation avantageuse, le carter présente au moins une ouverture latérale pour la mise en place d'au moins l'un des outils de coupe secondaire dans le ou l'un des logements. Cette disposition permet de bien différencier l'emplacement de l'outil de coupe secondaire utilisé pour découper les aliments du ou des autres outils de coupe secondaire disposés en position de rangement.

Avantageusement alors, le ou au moins l'un des outils de coupe secondaire disposé dans le ou l'un des logements de rangement présente un organe de préhension s'étendant à l'extérieur de l'ouverture latérale. Cette disposition permet de faciliter la manipulation des outils de coupe secondaire.

Selon une forme de réalisation avantageuse, le carter comprend des moyens de verrouillage coopérant avec le couvercle. Le carter porte alors la platine. Cette disposition permet notamment de bloquer la platine entre le couvercle et le carter. En alternative, le couvercle et le carter pourraient notamment être verrouillés sur la platine.

Selon une forme de réalisation préférée, le couvercle est verrouillé par baïonnette avec le carter. Une telle construction présente une réalisation simple et une manipulation aisée. A titre de variante, le couvercle peut notamment être assemblé avec le carter par vissage, par une bride ou par un crochet.

Avantageusement alors, des languettes issues du couvercle sont engagées sous des pattes de verrouillage issues du carter lorsque le couvercle est verrouillé avec le carter. Cette disposition permet de simplifier la construction en limitant les épaisseurs de parois.

Avantageusement alors, les languettes sont extérieures, et les pattes de verrouillage sont intérieures. Cette disposition permet de limiter l'encombrement de l'accessoire de découpe d'aliments.

Avantageusement alors, la platine comporte une bordure supérieure s'étendant au dessus des pattes de verrouillage lorsque la platine est en place sur le carter, des fenêtres d'introduction ménagées dans la bordure supérieure pour le passage des languettes, ainsi que des fenêtres de verrouillage prolongeant les fenêtres d'introduction, les languettes étant engagées dans les fenêtres de verrouillage lorsque le couvercle est verrouillé avec le carter. Cette disposition permet de faciliter la mise en place de la platine sur le carter.

Selon une forme de réalisation avantageuse, la platine comporte au moins une butée pour retenir le ou l'un des outils de coupe secondaire disposé dans le ou l'un des logements de rangement lorsque le couvercle est en position verrouillée. Cette disposition permet notamment d'éviter un déplacement du ou des outils de coupe secondaire non utilisés du fait de vibrations générées lors de l'utilisation de l'accessoire de découpe d'aliments.

Avantageusement encore, l'outil de coupe primaire comprend au moins :
- une arrête de coupe principale qui est située dans un plan de coupe sensiblement perpendiculaire à l'axe de rotation,
- et un biseau presseur qui est issu de l'arrête de coupe principale, qui est agencé du côté de l'outil de coupe secondaire disposé dans la fenêtre de coupe, et qui est incliné à partir de l'arrête de coupe principale dans une direction opposée au sens de rotation de l'outil de coupe primaire, de manière à presser les aliments tranchés contre l'outil de coupe secondaire disposé dans la fenêtre de coupe.
Cette disposition permet de découper une tranche d'aliments destinée à être pressée contre l'outil de coupe secondaire disposé dans la fenêtre de coupe.

Avantageusement encore, les outils de coupe secondaire comprennent au moins un organe de coupe qui est situé en regard de la goulotte et qui possède au moins une arrête de coupe orientée vers la goulotte. Cette disposition permet de fendre la tranche d'aliments découpée par l'outil de coupe primaire.

Avantageusement encore, l'organe de coupe s'étend dans un plan sensiblement parallèle à l'axe de rotation. En alternative, l'organe de coupe n'est pas nécessairement rectiligne.

Avantageusement alors, au moins l'un des outils de coupe secondaire comprend une première série d'organes de coupe sensiblement parallèles entre eux. Cette disposition permet notamment d'obtenir des bâtonnets ou des morceaux présentant une section carrée ou rectangulaire.

Avantageusement encore, au moins l'un des outils de coupe secondaire comprend une deuxième série d'organes de coupe sensiblement parallèles entre eux, la deuxième série d'organes de coupe définissant, avec la première série d'organes de coupe, une grille de découpe. Cette disposition permet notamment d'obtenir des cubes ou des parallélépipèdes rectangles.

Selon une forme de réalisation avantageuse permettant de réaliser un accessoire de découpe d'aliments amovible, le carter comprend une embase d'adaptation sur un boîtier d'entraînement motorisé et/ou sur un adaptateur, les moyens d'entraînement étant adaptés pour assurer la transmission du mouvement de rotation entre le boîtier d'entraînement motorisé, ou l'adaptateur, et l'outil de coupe primaire. Le carter peut ainsi être monté de manière amovible sur le boîtier d'entraînement motorisé ou sur l'adaptateur. En alternative, le carter pourrait notamment être solidaire d'un boîtier d'entraînement motorisé.

Ces objets sont atteints également avec un appareil électroménager de préparation culinaire, comportant un boîtier d'entraînement motorisé, si désiré un adaptateur amovible monté sur le boîtier d'entraînement motorisé, et un accessoire de découpe d'aliments amovible monté sur le boîtier d'entraînement motorisé et/ou sur l'adaptateur, du fait que l'accessoire de découpe d'aliments est conforme à l'une au moins des caractéristiques précitées.

Bien entendu, les différentes caractéristiques, variantes, formes et modes de réalisation de l'invention peuvent être associés les uns avec les autres selon diverses combinaisons dans la mesure où ils ne sont pas incompatibles ou exclusifs les uns des autres.

Par ailleurs, diverses autres caractéristiques de l'invention ressortent de la description annexée, effectuée en référence aux dessins qui illustrent des formes non limitatives de réalisation d'un accessoire de découpe d'aliments conforme à l'invention.
- La figure 1 est une coupe axiale schématique d'un accessoire de découpe d'aliments selon l'invention adapté sur un boîtier d'entraînement motorisé à arbre de sortie vertical.
- La figure 2 est une perspective schématique éclatée de l'accessoire de découpe d'aliments représenté à la figure 1.
- La figure 3 est une coupe axiale schématique à plus grande échelle de l'accessoire de découpe d'aliments représenté aux figures 1 et 2.
- La figure 4 est une perspective schématique d'un outil de coupe primaire constitutif de l'accessoire de découpe d'aliments illustré aux figures 1 à 3.
- La figure 5 est une coupe schématique selon le plan V-V de la figure 4.
- La figure 6 est une perspective schématique d'un outil de coupe secondaire constitutif de l'accessoire de découpe d'aliments illustré aux figures 1 à 3.
- La figure 7 est une perspective schématique d'un couvercle constitutif de l'accessoire de découpe d'aliments illustré aux figures 1 à 3.
- La figure 8 et une coupe axiale du couvercle représenté à la figure 7.
- La figure 9 est une perspective schématique d'un carter constitutif de l'accessoire de découpe d'aliments illustré aux figures 1 à 3.
- La figure 10 est une coupe axiale du carter représenté à la figure 9.
- La figure 11 est une coupe axiale d'une platine constitutive de l'accessoire de découpe d'aliments illustré aux figures 1 à 3.
- La figure 12 est une coupe axiale schématique d'un accessoire de découpe d'aliments selon l'invention adapté sur un adaptateur monté sur un boîtier d'entraînement motorisé à arbre de sortie horizontal.

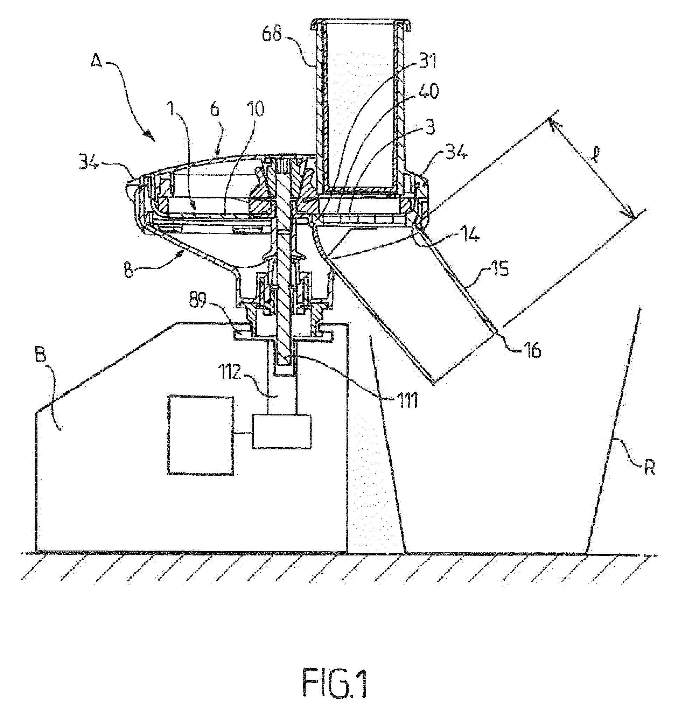

Un accessoire de découpe d'aliments selon l'invention, tel qu'illustré figure 1 et désigné dans son ensemble par la référence A, est destiné à être adapté de manière amovible sur un boîtier d'entraînement motorisé B.

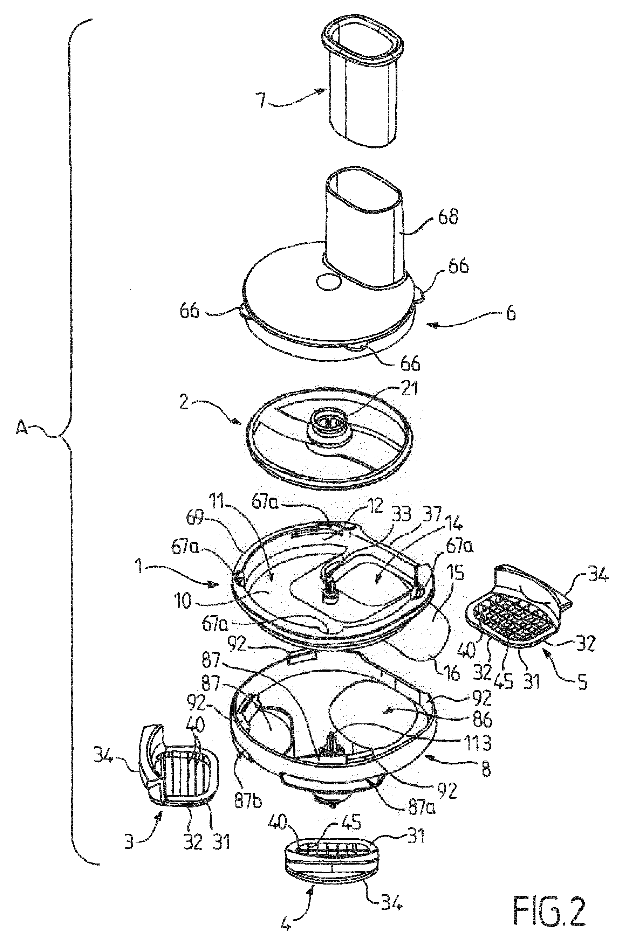

Selon l'exemple illustré et comme cela ressort de la figure 2, l'accessoire de découpe d'aliments A résulte du montage de huit composants principaux, à savoir :
- une platine 1,
- un outil de coupe primaire 2 rotatif,
- trois outils de coupe secondaire 3, 4, 5 fixes interchangeables,
- un couvercle 6,
- un poussoir 7,
- un carter 8,
chaque composant principal pouvant résulter de l'assemblage de différents éléments et les huit composants principaux pouvant en outre être séparés de manière à permettre un nettoyage aisé de l'accessoire de découpe d'aliments.

La platine 1 comprend un fond 10 qui forme un siège de réception 11 pour l'outil de coupe primaire 2 et qui est entouré par un rebord périphérique 12. La platine 1 délimite ainsi en partie une chambre de travail 13. Dans l'exemple de réalisation illustré aux figures, la chambre de travail 13 possède avantageusement une forme générale sensiblement cylindrique de révolution selon un axe de rotation Δ. Comme cela apparaîtra par la suite, l'outil de coupe primaire 2 est mobile en rotation dans la chambre de travail 13 selon l'axe de rotation Δ sensiblement perpendiculaire au fond 10. Par ailleurs, le fond 10 est pourvu d'une fenêtre de coupe 14 destinée à recevoir l'un ou l'autre des trois outils de coupe secondaire 3 à 5.

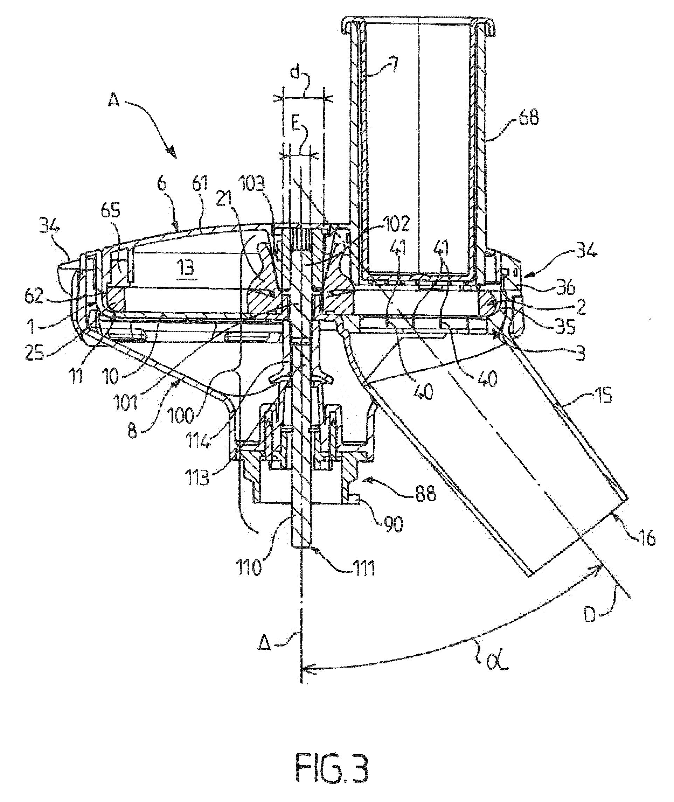

La platine 1 comprend un conduit 15 d'évacuation des aliments découpés qui est raccordé à la fenêtre de coupe 14 et qui s'étend à l'extérieur de la chambre de travail 13. Selon l'exemple illustré, le conduit 15 possède une extrémité sensiblement droite qui s'étend selon un axe longitudinal D formant, avec l'axe de rotation Δ, un angle aigu α compris entre 20° et 50°, visible à la figure 3, de manière à faciliter la mise en place d'un récipient R sous l'extrémité libre 16 du conduit 15. De manière préférée, le conduit 15 présente une extrémité libre 16 distante d'une longueur l supérieure ou égale à 100 mm à partir de la fenêtre de coupe 14. De même, le conduit 15 possède une section dont la moyenne des dimensions maximale et minimale est au plus égale à 65,5 mm, et/ou dont la dimension maximale est au plus égale à 76 mm. De plus, dans le cas présent, le conduit 15 possède une section décroissante depuis la fenêtre de coupe 14 jusqu'à son extrémité libre 16.

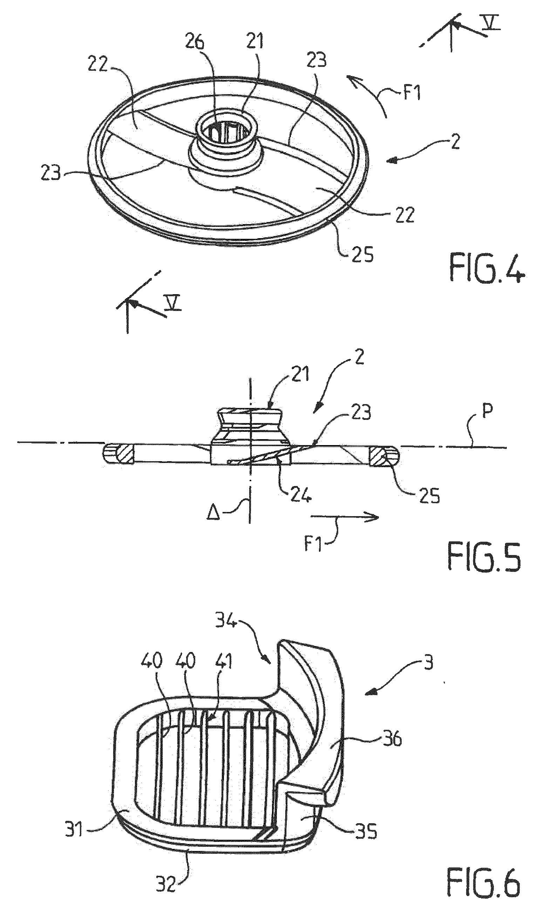

L'outil de coupe primaire 2, illustré seul aux figures 4 et 5, comprend un moyeu d'entraînement 21 à partir duquel s'étendent deux lames 22 qui comprennent chacune une arrête de coupe principale 23 située dans un plan de coupe P sensiblement perpendiculaire à l'axe de rotation Δ. Chaque lame 22 comprend en outre un biseau presseur 24 qui est issu de l'arrête de coupe principale 23 et incliné dans une direction opposée au sens de rotation de l'outil de coupe primaire 2 tel qu'indiqué par la flèche F1. L'outil de coupe primaire 2 comprend également un anneau périphérique 25 qui est destiné à venir en appui contre le siège de réception 11 formé par le bord périphérique extérieur du fond 10. Le moyeu d'entraînement 21 comprend en outre une fenêtre d'entraînement 26 dont la fonction apparaîtra par la suite.

Chaque outil de coupe secondaire 3 à 5 comprend un châssis 31 qui possède une forme extérieure complémentaire de celle de la périphérie de la fenêtre de coupe 14. Le châssis 31 présente ici une forme générale sensiblement rectangulaire à coins arrondis et comprend trois butées latérales 32 chacune située sur un côté du châssis 31 et destinées à venir en appui dans trois logements 33 aménagés à la périphérie de la fenêtre de coupe 14. Le châssis 31 comprend en outre un organe de préhension 34 en L dont une première branche 35 s'étend verticalement à partir d'un côté du châssis 31 de manière à longer le rebord périphérique 12. La première branche 35 présente alors une forme complémentaire de celle du rebord périphérique 12. La première branche 35 se trouve prolongée par une deuxième branche 36 qui s'étend latéralement à partir de la première branche 35 vers l'extérieur de la platine 1 de manière à venir en appui dans une échancrure 37 aménagée dans le rebord périphérique 12. La deuxième branche 36 s'étend alors à l'extérieur de la chambre de travail 13. Ainsi, l'organe de préhension 34, qui s'étend en partie latéralement à l'extérieur de la chambre de travail 13, permet de retirer facilement l'outil de coupe secondaire correspondant hors de la fenêtre de coupe 14 par un mouvement de translation sensiblement parallèle à l'axe de rotation Δ de l'outil de coupe primaire 2.

Les outils de coupe secondaire 3, 4, 5 sont interchangeables. Selon l'exemple illustré, le premier outil de coupe secondaire 3 comprend une première série d'organes de coupe 40 sensiblement parallèles entre eux. Chaque organe de coupe 40 de la première série s'étend selon un axe sensiblement parallèle à l'axe de rotation Δ et possède une arrête de coupe 41 orientée vers le haut. Ainsi le premier outil de coupe secondaire 3 permet de réaliser lorsqu'il est utilisé avec l'outil de coupe primaire 2 une découpe d'aliments en bâtonnets.

Toujours selon l'exemple illustré, les deuxième et troisième outils de coupe secondaire 4 et 5 comprennent en outre chacun une deuxième série d'organes de coupe 45 sensiblement parallèles entre eux qui définissent avec la première série d'organes de coupe 40 une grille de découpe. Ainsi, les deuxième et troisième outils de coupe secondaire 4 et 5 permettent de réaliser des découpes en cubes lorsqu'ils sont utilisés avec l'outil de coupe primaire 2.

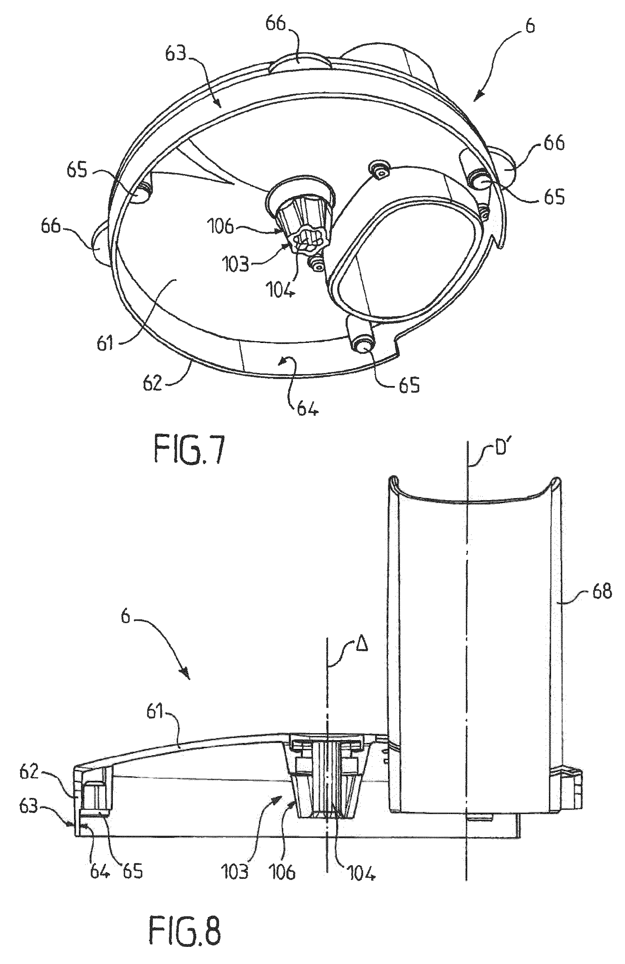

Le couvercle 6, illustré seul aux figures 7 et 8, est destiné à être adapté de manière amovible sur la platine 1 pour fermer en partie au moins la chambre de travail 13. À cet effet, le couvercle 6 comprend un toit 61 qui est bordé sur sa face inférieure par une jupe périphérique 62 qui possède une face extérieure 63 sensiblement cylindrique de révolution selon l'axe de rotation Δ et de forme complémentaire à celle du rebord périphérique 12. Lors de la mise en place du couvercle 6 dans la platine 1, la jupe périphérique 62 est destinée à venir à s'insérer, au niveau de sa partie basse, entre l'anneau périphérique 25 et le rebord périphérique 12 de manière à centrer l'outil de coupe primaire 2. Ainsi, la jupe périphérique 62 possède une face inférieure 64 également sensiblement cylindrique de révolution selon l'axe de rotation Δ. Afin d'éviter que l'outil de coupe primaire 2 ne se soulève lorsqu'il travaille, le couvercle 6 comprend également trois pions 65 destinés à venir en appui sur le dessus de l'anneau périphérique 25.

Le couvercle 6 est mobile sur ou dans la platine 1 entre une position déverrouillée dans laquelle il peut être retiré de la platine 1 selon un mouvement de translation parallèle à l'axe de rotation Δ et une position verrouillée plus particulièrement illustrée à la figure 3 dans laquelle il ne peut pas être désolidarisé de la platine 1. Afin de permettre cette immobilisation du couvercle 6 sur la platine 1, il est mis en oeuvre un système de verrouillage à baïonnette qui comprend quatre languettes 66 portées par la face extérieure 63 de la jupe périphérique 62 et destinées à venir s'engager dans quatre fenêtres d'introduction 67a de la platine 1.

Le couvercle 6 comprend en outre une goulotte 68 d'introduction des aliments à découper. La goulotte 68 s'étend selon une direction longitudinale D' sensiblement parallèle à l'axe de rotation Δ de manière à se trouver en regard de la fenêtre de coupe 14 lorsque le couvercle 6 est en position verrouillée comme le montre la figure 3. Il est à noter que dans le cas présent l'extrémité inférieure de la goulotte 68 s'étend en dessous du toit 61 de manière à guider les aliments à découper au plus près de la fenêtre de coupe 14 tout en laissant un passage pour les lames 22 de l'outil de coupe primaire 2.

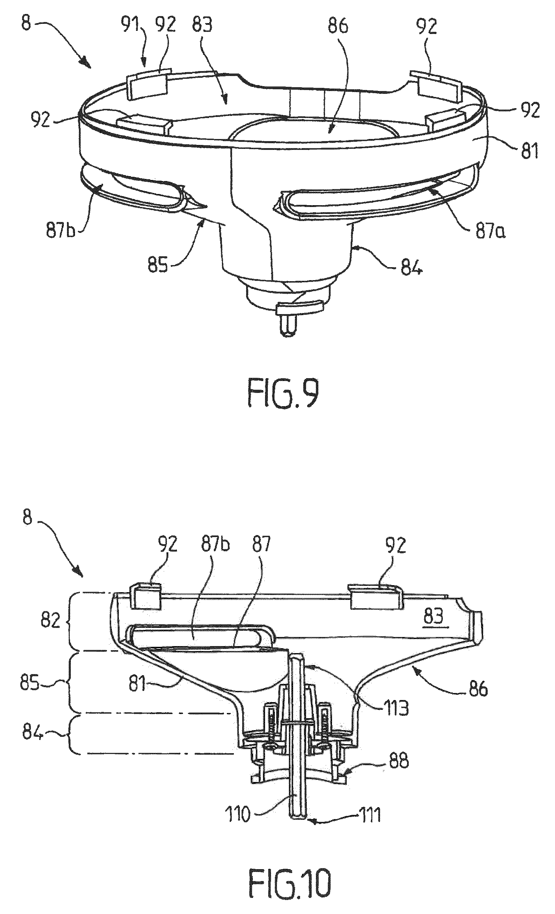

Le carter 8 est situé sous la platine 1. Le carter 8 est destiné à venir s'emboîter sous la platine 1 de manière à améliorer l'esthétique de cette dernière. Ainsi le carter 8 porte la platine 1. Comme le montrent plus particulièrement les figures 9 et 10, le carter 8 comprend une coque 81 qui présente une forme générale d'entonnoir dont la partie supérieure, de forme générale cylindrique, définit une chambre 83 de réception de la platine 1. La coque 81 comprend un tronc 84 de forme générale cylindrique de révolution qui est relié à une partie supérieure 82 par une partie intermédiaire 85 de forme générale tronconique. Afin de permettre l'emboitement de la platine 1 dans le carter 8, la partie intermédiaire 85 comprend une fenêtre 86 pour le passage du conduit 15. Ainsi le conduit 15 s'étend à l'extérieur du carter 8.

Le carter 8 définit avec la platine 1 des logements de rangement 87 pour les outils de coupe secondaire 3, 4, 5 à l'extérieur de la chambre de travail 13. En d'autres termes, les logements de rangement 87 sont ménagés du côté de la platine 1 opposé au siège de réception 11 de l'outil de coupe primaire 2. A cet effet le carter 8 comprend également dans sa partie intermédiaire 85 deux ouvertures latérales 87a, 87b pour la mise en place d'un des outils de coupe secondaire 3, 4, 5 dans l'un des logements de rangement 87. Par ailleurs, l'organe de préhension 34 des outils de coupe secondaire 3, 4, 5 disposés dans les logements de rangement 87 s'étend à l'extérieur de l'ouverture latérale 87a, 87b.

Le tronc 84 porte, à l'opposé de la chambre 83, une embase 88 d'adaptation sur le boîtier d'entraînement motorisé B qui comprend à cet effet un logement d'adaptation 89 dans lequel l'embase 88 est immobilisée par un système de verrouillage à baïonnette 90.

Le carter 8 comprend aussi des moyens de verrouillage 91 qui coopèrent avec le couvercle 6 lorsque ce dernier est en position verrouillée. Dans l'exemple de réalisation illustré sur les figures, les moyens de verrouillage 91 sont du type à baïonnette et comprennent, dans le cas présent, quatre pattes de verrouillage 92 sous lesquelles les languettes 66 du couvercle 6 viennent se placer en position verrouillée de ce dernier. Ainsi, la platine 1 se trouve parfaitement immobilisée entre le couvercle 6 et le carter 8. Le couvercle 6 en position verrouillée vient en prise avec le carter 8. Le couvercle 6 est verrouillé par baïonnette avec le carter 8.

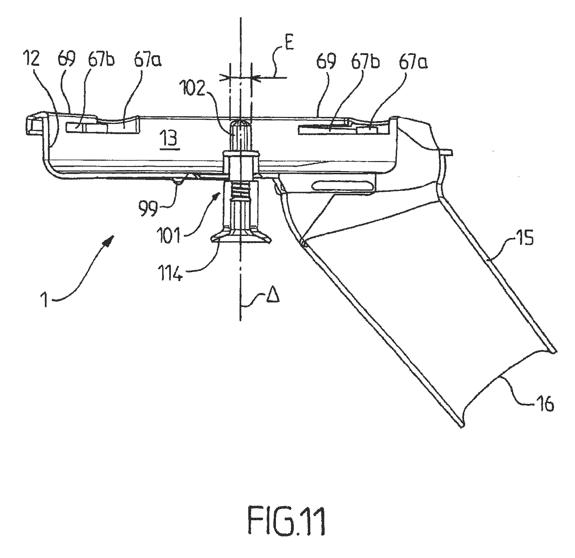

Plus particulièrement dans l'exemple de réalisation illustré aux figures, les languettes 66 issues du couvercle 6 sont engagées sous les pattes de verrouillage 92 issues du carter 8 lorsque le couvercle 6 est verrouillé avec le carter 8. Tel que bien visible sur la figure 7, les languettes 66 issues du couvercle 6 sont extérieures. Tel que bien visible sur la figure 9, les pattes de verrouillage 92 issues du carter 8 sont intérieures. Par ailleurs, tel que bien visible sur la figure 11, la platine 1 comporte une bordure supérieure 69. Les fenêtres d'introduction 67a sont ménagées dans la bordure supérieure 69 pour le passage des languettes 66 du couvercle 6. Des fenêtres de verrouillage 67b prolongent les fenêtres d'introduction 67a. La bordure supérieure 69 s'étend au dessus des pattes de verrouillage 92 lorsque la platine 1 est en place sur le carter. Les languettes 66 sont engagées dans les fenêtres de verrouillage 67b lorsque le couvercle 6 est verrouillé avec le carter 8. Les pattes de verrouillage 92 sont disposées derrière les fenêtres de verrouillage 67b lorsque le couvercle 6 est verrouillé avec le carter 8. Ainsi le couvercle 6 verrouillé avec le carter 8 est aussi verrouillé avec la platine 1. Pour retenir les outils de coupe secondaire 3, 4, 5 disposés dans les logements de rangement 87 lorsque le couvercle 6 est en position verrouillée, la platine 1 comporte des butées 99 disposées sous le fond 10. Les butées coopèrent par exemple avec les organes de coupe 40, 45 et/ou le châssis 31.

L'accessoire de découpe d'aliments A selon l'invention comprend également des moyens d'entraînement 100 de l'outil de coupe primaire 2 en rotation dans la chambre de travail 13.

Selon l'exemple illustré, les moyens d'entraînement 100 comprennent un arbre d'entraînement 101 selon l'axe de rotation Δ qui est solidaire de la platine 1 en étant lié en translation à cette dernière et libre en rotation selon l'axe de rotation Δ par rapport à celle-ci.

Comme le montre notamment la figure 11, l'arbre d'entraînement 101 possède une tête d'entraînement 102 qui s'étend dans la chambre de travail 13. La tête d'entraînement 102 présente en section droite transversale une plus grande dimension E qui est strictement inférieure à la plus petite dimension d de la fenêtre d'entraînement 26 du moyeu d'entraînement 21. Ainsi l'arbre d'entraînement 101 ne peut entraîner directement l'outil de coupe primaire 2. Dans le cas présent la tête d'entraînement 102 possède une forme cannelée.

Afin d'assurer une liaison en rotation du moyeu d'entraînement 21 et de l'arbre d'entraînement 101, les moyens d'entraînement 100 comprennent en outre une douille d'entraînement 103 qui est portée par le couvercle 6 en étant liée en translation à ce dernier et libre en rotation selon l'axe de rotation Δ par rapport à celui-ci.

La douille d'entraînement 103 est adaptée pour lier en rotation la tête d'entraînement 102 et l'outil de coupe primaire 2 lorsque le couvercle 6 est placé sur ou dans la platine 1. À cet effet, la douille d'entraînement 103 comprend un alésage axial d'entraînement 104 qui possède une forme complémentaire de celle de la tête d'entraînement 102. La douille d'entraînement 103 présente une forme extérieure 106 complémentaire de celle de la fenêtre d'entraînement 26. Dans le cas présent, la fenêtre d'entraînement 26 possède une forme cannelée qui converge vers le fond 10 de la platine 1. Les formes générales tronconiques, de la fenêtre d'entraînement 26 et de la forme extérieure 106 de la douille d'entraînement 103, imposent le sens de montage de l'outil de coupe primaire 2 dans la mesure où la douille d'entraînement 103 ne peut s'engager en translation axiale selon la direction de l'axe de rotation Δ sur la tête d'entraînement 102 et dans la fenêtre d'entraînement 26 que si la plus grande section de passage de la fenêtre d'entraînement 26 est orientée vers le haut.

Les moyens d'entraînement 100 comprennent en outre un arbre intermédiaire 110 d'axe de rotation Δ qui est solidaire du carter 8 en étant lié en translation à ce dernier et libre en rotation selon l'axe de rotation Δ par rapport à celui-ci. L'arbre intermédiaire 110 comprend un pied d'entraînement 111 qui s'étend à l'extérieur de l'embase 88 et qui est destiné à coopérer avec un arbre de sortie 112 du boîtier d'entraînement motorisé B, comme le montre la figure 1. L'arbre intermédiaire 110 comprend, à l'opposé du pied d'entraînement 111, une tête d'accouplement 113 qui est située à l'intérieur du carter 8 et qui est destinée à coopérer avec un pied d'accouplement 114 porté par l'arbre d'entraînement 101.

Les différents composants principaux constitutifs décrits ci-dessus sont assemblés de la manière suivante pour former l'accessoire de découpe d'aliments A selon l'invention.

Tout d'abord, la platine 1 est emboîtée dans le carter 8, le conduit 15 étant engagé dans la fenêtre 86 et le pied d'accouplement 114 venant s'engager en translation selon l'axe de rotation Δ sur la tête d'accouplement 113. Ainsi, après cet emboîtement la tête d'entraînement 102 et le pied d'entraînement 111 se trouvent liés en rotation. Le sous-ensemble ainsi formé peut être placé sur le boîtier d'entraînement motorisé B, le pied d'entraînement 111 venant s'emboîter dans l'arbre de sortie 112 tandis que l'embase 88 est verrouillée dans le logement d'adaptation 89 dudit boîtier d'entraînement motorisé B.

Ensuite, l'un des outils de coupe secondaire 3 à 5 est disposé dans la fenêtre de coupe 14 selon un mouvement de translation sensiblement parallèle à l'axe de rotation Δ tandis que les deux autres outils de coupe secondaire sont chacun placés dans l'un des logements de rangement 87.

L'outil de coupe primaire 2 peut alors être placé dans la chambre de travail 13, la fenêtre d'entraînement 26 étant centrée sur la tête d'entraînement 102. Le montage de l'accessoire de découpe d'aliments A est achevé en plaçant le couvercle 6 sur la platine 1, la jupe périphérique 62 venant entre l'anneau périphérique 25 et le rebord périphérique 12 tandis que la douille d'entraînement 103 s'engage dans la fenêtre d'entraînement 26 et sur la tête d'entraînement 102. Le verrouillage du couvercle 6 est assuré par un mouvement de rotation selon l'axe de rotation Δ de manière à venir placer les languettes 66 sous les pattes de verrouillage 92.

L'accessoire de découpe d'aliments A peut alors être utilisé pour assurer la découpe d'aliments.

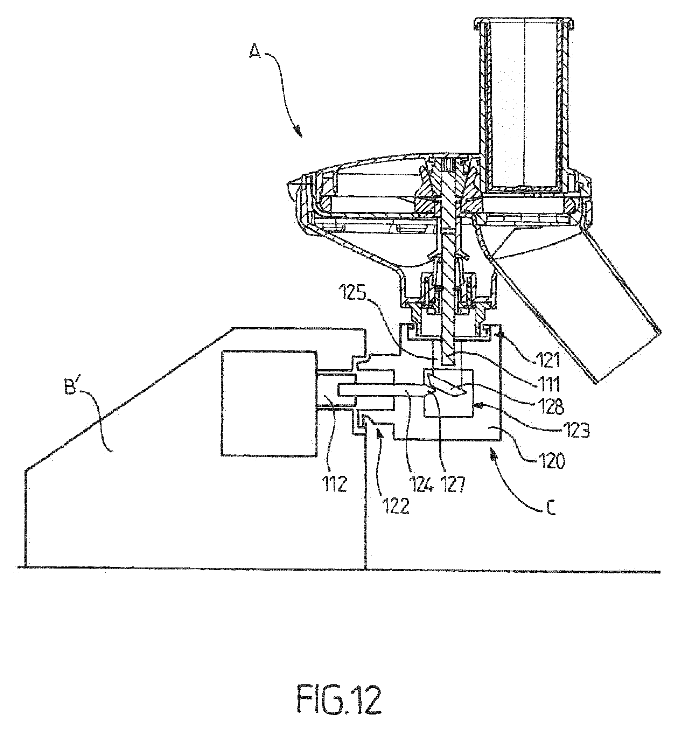

Selon l'exemple illustré à la figure 1, le boîtier d'entraînement motorisé B comprend un arbre de sortie 112 vertical. Toutefois, selon l'invention, l'accessoire de découpe d'aliments A peut aussi être utilisé avec un boîtier d'entraînement motorisé B', tel qu'illustré figure 12, dont l'arbre de sortie 112 est horizontal.

A cet effet, l'accessoire de découpe d'aliments A peut être associé à un adaptateur C amovible comprenant des moyens 121 de réception de l'embase 88 et un pied d'adaptation 122 sur le boîtier d'entraînement motorisé B'.

Afin d'assurer la transmission du mouvement de rotation de l'arbre de sortie 112 sensiblement horizontal au pied d'entraînement 111 d'axe de rotation Δ sensiblement vertical, l'adaptateur C comporte un bloc de renvoi d'angle 120 comprenant au moins un train d'engrenage 123 assurant un renvoi d'angle entre un pied de transmission 124 qui coopère avec l'arbre de sortie 112 et une tête de transmission 125 qui coopère avec le pied d'entraînement 111, le pied de transmission 124 ayant un mouvement de rotation sur lui-même coaxial à celui de l'arbre d'entraînement 101 et la tête de transmission 125 ayant un mouvement de rotation sur elle-même coaxial à celui du pied d'entraînement 111.

Le train d'engrenage 123 comprend par exemple deux pignons coniques l'un 127 lié en rotation au pied de transmission 124 l'autre 128 à la tête de transmission 125.

A titre de variante, l'adaptateur C ne comporte pas nécessairement un bloc de renvoi d'angle 120. L'adaptateur C peut notamment comporter un pied d'adaptation 122 dont la configuration est différente de la configuration de l'embase 88 de l'accessoire de découpe d'aliments A, pour autoriser le montage de l'accessoire de découpe d'aliments A sur d'autres types de boîtiers d'entraînement motorisés.

A titre de variante, l'accessoire de découpe d'aliments A peut comporter au moins deux outils de coupe secondaire 3, 4, 5 fixes interchangeables, et de préférence entre deux et quatre outils de coupe secondaire fixes interchangeables.

A titre de variante, le carter 8 peut définir avec la platine 1 au moins un logement de rangement 87 pour l'un des outils de coupe secondaire 3, 4, 5 à l'extérieur de la chambre de travail 13.

A titre de variante, le carter 8 peut présenter au moins une ouverture latérale 87a, 87b pour la mise en place du ou d'au moins l'un des outils de coupe secondaire 3, 4, 5 dans le ou l'un des logements.

A titre de variante, le ou au moins l'un des outils de coupe secondaire 3, 4, 5 disposé dans le ou l'un des logements de rangement 87 peut présenter un organe de préhension 34 s'étendant à l'extérieur de l'ouverture latérale 87a, 87b.

A titre de variante, la platine 1 peut comporter au moins une butée 99 pour retenir le ou l'un des outils de coupe secondaire 3, 4, 5 disposé dans le ou l'un des logements de rangement 87 lorsque le couvercle 6 est en position verrouillée

A titre de variante, les moyens d'entraînement 100 ne comprennent pas nécessairement une douille d'entraînement 103 portée par le couvercle 6 et/ou un arbre d'entraînement 101 solidaire de la platine 1. La tête d'accouplement 113 peut notamment entraîner directement l'outil de coupe primaire 2. D'autres dispositifs de sécurité peuvent être envisagés pour éviter l'accès à l'outil de coupe primaire 2 en l'absence du couvercle 6, notamment un interrupteur électrique ou magnétique détectant la présence du couvercle 6 correctement verrouillé sur le carter 8.

A titre de variante, les moyens de verrouillage 91 ne sont pas nécessairement du type à baïonnette. Le couvercle 6 peut notamment être assemblé avec le carter 8 par vissage, par au moins une bride ou par au moins un crochet.

A titre de variante, le couvercle 6 n'est pas nécessairement amovible par rapport à la platine 1 et au carter 8. Le couvercle 6 peut notamment être monté pivotant sur la platine 1 ou sur le carter 8.

A titre de variante, la platine 1 n'est pas nécessairement verrouillée avec le couvercle 6 lorsque le carter 8 est verrouillé avec le couvercle 6.

A titre de variante, le carter 8 ne comprend pas nécessairement des moyens de verrouillage 91 coopérant avec le couvercle 6. Le carter 8 peut notamment comprendre des moyens de verrouillage coopérant avec la platine 1, la platine 1 comportant d'autres moyens de verrouillage coopérant avec le couvercle 6. Si désiré, le couvercle 6 peut par exemple être verrouillé avec la platine 1 au moyen des languettes 66 engagées dans les fenêtres de verrouillage 67b.

La présente invention n'est nullement limitée aux exemples de réalisation décrits, mais englobe de nombreuses modifications dans le cadre des revendications.

## Revendications

1. Accessoire de découpe d'aliments (A) comprenant :
- un outil de coupe primaire (2) rotatif,
- au moins deux outils de coupe secondaire (3 ; 4 ; 5) fixes interchangeables,
- une platine (1) qui comprend un fond (10) pourvu d'un siège de réception (11) de l'outil de coupe primaire (2) mobile en rotation selon un axe de rotation (Δ) ainsi que d'une fenêtre de coupe (14) dans laquelle est disposé l'un des outils de coupe secondaire (3 ; 4 ; 5), la platine (1) délimitant en partie une chambre de travail (13) ouverte à l'opposé du fond (10),
- un couvercle (6) comprenant une goulotte (68) d'introduction des aliments à découper située sensiblement en regard de la fenêtre de coupe (14),
- un carter (8) définissant avec la platine (1) au moins un logement de rangement (87) pour l'un des outils de coupe secondaire (3 ; 4 ; 5),
- des moyens d'entraînement (100) en rotation de l'outil de coupe primaire (2),
**caractérisé en ce que** la platine (1) comprend un conduit (15) d'évacuation des aliments découpés raccordé à la fenêtre de coupe (14) et s'étendant à l'extérieur de la chambre de travail (13) et du carter (8).

2. Accessoire de découpe d'aliments (A) selon la revendication 1, **caractérisé en ce que** le carter (8) présente au moins une ouverture latérale (87a, 87b) pour la mise en place d'au moins l'un des outils de coupe secondaire (3 ; 4 ; 5) dans le ou l'un des logements (87).

3. Accessoire de découpe d'aliments (A) selon la revendication 2, **caractérisé en ce que** le ou au moins l'un des outils de coupe secondaire (3 ; 4 ; 5) disposé dans le ou l'un des logements de rangement (87) présente un organe de préhension (34) s'étendant à l'extérieur de l'ouverture latérale (87a, 87b).

4. Accessoire de découpe d'aliments (A) selon l'une des revendications 1 à 3, **caractérisé en ce que** le carter (8) comprend des moyens de verrouillage (91) coopérant avec le couvercle (6).

5. Accessoire de découpe d'aliments (A) selon la revendication 4, **caractérisé en ce que** le couvercle (6) est verrouillé par baïonnette avec le carter (8).

6. Accessoire de découpe d'aliments (A) selon la revendication 5, **caractérisé en ce que** des languettes (66) issues du couvercle (6) sont engagées sous des pattes de verrouillage (92) issues du carter (8) lorsque le couvercle (6) est verrouillé avec le carter (8).

7. Accessoire de découpe d'aliments (A) selon la revendication 6, **caractérisé en ce que** les languettes (66) sont extérieures, et **en ce que** les pattes de verrouillage (92) sont intérieures.

8. Accessoire de découpe d'aliments (A) selon la revendication 7, **caractérisé en ce que** la platine (1) comporte une bordure supérieure (69) s'étendant au dessus des pattes de verrouillage (92) lorsque la platine (1) est en place sur le carter (8), des fenêtres d'introduction (67a) ménagées dans la bordure supérieure (69) pour le passage des languettes (66), ainsi que des fenêtres de verrouillage (67b) prolongeant les fenêtres d'introduction (67a), les languettes (66) étant engagées dans les fenêtres de verrouillage (67b) lorsque le couvercle (6) est verrouillé avec le carter (8).

9. Accessoire de découpe d'aliments (A) selon l'une des revendications 4 à 8 lorsque dépendant de l'une des revendications 2 ou 3, **caractérisé en ce que** la platine (1) comporte au moins une butée (99) pour retenir le ou l'un des outils de coupe secondaire (3 ; 4 ; 5) disposé dans le ou l'un des logements de rangement (87) lorsque le couvercle (6) est en position verrouillée.

10. Accessoire de découpe d'aliments (A) selon l'une des revendications 1 à 9, **caractérisé en ce que** l'outil de coupe primaire (2) comprend au moins :
- une arrête de coupe principale (23) qui est située dans un plan de coupe (P) sensiblement perpendiculaire à l'axe de rotation (Δ),
- et un biseau presseur (24) qui est issu de l'arrête de coupe principale (23), qui est agencé du côté de l'outil de coupe secondaire (3 ; 4 ; 5) disposé dans la fenêtre de coupe (14), et qui est incliné à partir de l'arrête de coupe principale (23) dans une direction opposée au sens de rotation de l'outil de coupe primaire (2), de manière à presser les aliments tranchés contre l'outil de coupe secondaire (3 ; 4 ; 5) disposé dans la fenêtre de coupe (14).

11. Accessoire de découpe d'aliments (A) selon l'une des revendications 1 à 10, **caractérisé en ce que** les outils de coupe secondaire (3 ; 4 ; 5) comprennent au moins un organe de coupe (40) qui est situé en regard de la goulotte (68) et qui possède au moins une arrête de coupe (41) orientée vers la goulotte (68).

12. Accessoire de découpe d'aliments (A) selon la revendication 11, **caractérisé en ce qu'**au moins l'un des outils de coupe secondaire (3 ; 4 ; 5) comprend une première série d'organes de coupe (40) sensiblement parallèles entre eux.

13. Accessoire de découpe d'aliments (A) selon la revendication 12, **caractérisé en ce qu'**au moins l'un des outils de coupe secondaire (3 ; 4 ; 5) comprend une deuxième série d'organes de coupe (45) sensiblement parallèles entre eux, la deuxième série d'organes de coupe (45) définissant, avec la première série d'organes de coupe (40), une grille de découpe.

14. Accessoire de découpe d'aliments (A) selon l'une des revendications 1 à 13, **caractérisé en ce que** le carter (8) comprend une embase (88) d'adaptation sur un boîtier d'entraînement motorisé (B) et/ou sur un adaptateur (C), les moyens d'entraînement (100) étant adaptés pour assurer la transmission du mouvement de rotation entre le boîtier d'entraînement motorisé (B), ou l'adaptateur (C), et l'outil de coupe primaire (2).

15. Appareil électroménager de préparation culinaire, comportant un boîtier d'entraînement motorisé (B, B'), si désiré un adaptateur (C) amovible monté sur le boîtier d'entraînement motorisé (B'), et un accessoire de découpe d'aliments (A) amovible monté sur le boîtier d'entraînement motorisé (B) et/ou sur l'adaptateur (C), **caractérisé en ce que** l'accessoire de découpe d'aliments (A) est conforme à l'une des revendications 1 à 14.

## Patentansprüche

1. Zubehör (A) zum Zerkleinern von Lebensmitteln mit:
- einem drehenden primären Schneidwerkzeug (2),
- zumindest zwei austauschbaren, feststehenden sekundären Schneidwerkzeugen (3; 4; 5),
- einer Platte (1), die einen Boden (10) umfasst, der mit einem Sitz (11) zur Aufnahme des primären Schneidwerkzeugs (2), das um eine Drehachse (Δ) drehbar ist, sowie mit einem Schneidfenster (14) versehen ist, in dem eines der sekundären Schneidwerkzeuge (3; 4; 5) angeordnet ist, wobei die Platte (1) einen Teil eines Arbeitsraums (13) begrenzt, der dem Boden (10) gegenüberliegend offen ist,
- einem Deckel (6) mit einem Schacht (68) zum Einfüllen der zu zerkleinernden Lebensmittel, der sich im Wesentlichen gegenüber dem Schneidfenster (14) befindet,
- einer Schale (8), die mit der Platte (1) zumindest eine Aufnahme (87) zum Aufbewahren eines der sekundären Schneidwerkzeuge (3; 4; 5) definiert,
- Mitteln (100) für den Drehantrieb des primären Schneidwerkzeugs (2), **dadurch gekennzeichnet, dass** die Platte (1) einen Kanal (15) zum Ausgeben der zerkleinerten Lebensmittel umfasst, der mit dem Schneidfenster (14) verbunden ist und an der Außenseite des Arbeitsraums (13) und der Schale (8) verläuft.

2. Zubehör (A) zum Zerkleinern von Lebensmitteln nach Anspruch 1, **dadurch gekennzeichnet, dass** die Schale (8) zumindest eine seitliche Öffnung (87a; 87b) zum Einsetzen zumindest eines der sekundären Schneidwerkzeuge (3; 4; 5) in die Aufnahme oder eine der Aufnahmen (87) umfasst.

3. Zubehör (A) zum Zerkleinern von Lebensmitteln nach Anspruch 2, **dadurch gekennzeichnet, dass** das sekundäre Schneidwerkzeug oder zumindest eines der sekundären Schneidwerkzeuge (3; 4; 5), das sich in der Aufnahme oder einer der Aufnahmen (87) zur Aufbewahrung befindet, ein Griffelement (34) aufweist, das außerhalb der seitlichen Öffnung (87a; 87b) verläuft.

4. Zubehör (A) zum Zerkleinern von Lebensmitteln nach einem der Ansprüche 1 bis 3, **dadurch gekennzeichnet, dass** die Schale (8) Verriegelungsmittel (91) umfasst, die mit dem Deckel (6) zusammenwirken.

5. Zubehör (A) zum Zerkleinern von Lebensmitteln nach Anspruch 4, **dadurch gekennzeichnet, dass** der Deckel (6) mit einem Bajonettverschluss mit der Schale (8) verriegelt wird.

6. Zubehör (A) zum Zerkleinern von Lebensmitteln nach Anspruch 5, **dadurch gekennzeichnet, dass** die aus dem Deckel (6) hervorstehenden Zungen (66) unter den an der Schale (8) ausgebildeten Verriegelungselementen (92) einrasten, wenn der Deckel (6) mit der Schale (8) verriegelt wird.

7. Zubehör (A) zum Zerkleinern von Lebensmitteln nach Anspruch 6, **dadurch gekennzeichnet, dass** die Zungen (66) außenliegend und die Verriegelungselemente (92) innenliegend sind.

8. Zubehör (A) zum Zerkleinern von Lebensmitteln nach Anspruch 7, **dadurch gekennzeichnet, dass** die Platte (1) einen oberen Rand (69), der oberhalb der Verriegelungselemente (92) verläuft, wenn die Platte (1) auf der Schale (8) sitzt, in dem oberen Rand (69) für den Durchtritt der Zungen (66) ausgebildete Einführfenster (67a) sowie Verriegelungsfenster (67b), die die Einführfenster (67a) verlängern, umfasst, wobei die Zungen (66) in den Verriegelungsfenstern (67b) einrasten, wenn der Deckel (6) mit der Schale (8) verriegelt wird.

9. Zubehör (A) zum Zerkleinern von Lebensmitteln nach einem der Ansprüche 4 bis 8, wenn von einem der Ansprüche 2 oder 3 abhängig, **dadurch gekennzeichnet, dass** die Platte (1) zumindest einen Anschlag (99) zum Zurückhalten des sekundären Schneidwerkzeugs oder eines der sekundären Schneidwerkzeuge (3; 4; 5) umfasst, das sich in der oder in einer der Aufnahmen (87) zur Aufbewahrung befindet, wenn sich der Deckel (6) in der verriegelten Stellung befindet.

10. Zubehör (A) zum Zerkleinern von Lebensmitteln nach einem der Ansprüche 1 bis 9, **dadurch gekennzeichnet, dass** das primäre Schneidwerkzeug (2) zumindest Folgendes umfasst:
- eine Hauptschneide (23), die in einer im Wesentlichen senkrecht zur Drehachse (Δ) stehenden Schneidebene (P) angeordnet ist,
- und eine Pressschräge (24), die aus der Hauptschneide (23) hervorgeht, die auf der Seite des in dem Schneidfenster (14) angeordneten sekundären Schneidwerkzeugs (3; 4; 5) angeordnet ist, und ausgehend von der Hauptschneide (23) in einer der Drehrichtung des primären Schneidwerkzeugs (2) entgegengesetzten Richtung geneigt ist, sodass sie die zerkleinerten Lebensmittel gegen das in dem Schneidfenster (14) angeordnete sekundäre Schneidwerkzeug (3; 4; 5) presst.

11. Zubehör (A) zum Zerkleinern von Lebensmitteln nach einem der Ansprüche 1 bis 10, **dadurch gekennzeichnet, dass** die sekundären Schneidwerkzeuge (3; 4; 5) zumindest ein Schneidelement (40) aufweisen, das gegenüber dem Schacht (68) angeordnet ist und zumindest eine Schneide (41) aufweist, die zum Schacht (68) hin ausgerichtet ist.

12. Zubehör (A) zum Zerkleinern von Lebensmitteln nach Anspruch 11, **dadurch gekennzeichnet, dass** zumindest eines der sekundären Schneidwerkzeuge (3; 4; 5) eine erste Folge von im Wesentlichen parallel zueinander stehenden Schneidelementen (40) umfasst.

13. Zubehör (A) zum Zerkleinern von Lebensmitteln nach Anspruch 12, **dadurch gekennzeichnet, dass** zumindest eines der sekundären Schneidwerkzeuge (3; 4; 5) eine zweite Folge von im Wesentlichen parallel zueinander stehenden Schneidelementen (45) umfasst, wobei die zweite Folge von Schneidelementen (45) mit der ersten Folge von Schneidelementen (40) ein Zerkleinerungsgitter bildet.

14. Zubehör (A) zum Zerkleinern von Lebensmitteln nach einem der Ansprüche 1 bis 13, **dadurch gekennzeichnet, dass** die Schale (8) einen Sockel (88) zum Anschluss an ein Motorantriebsgehäuse (B) und/oder an einen Adapter (C) umfasst, wobei die Antriebsmittel (100) so ausgelegt sind, dass sie die Übertragung der Drehbewegung von dem Motorantriebsgehäuse (B) oder dem Adapter (C) auf das primäre Schneidwerkzeug (2) sicherstellen.

15. Elektrohaushaltsgerät zur Zubereitung von Speisen mit einem Motorantriebsgehäuse (B, B'), falls gewünscht einem abnehmbaren Adapter (C), der auf das Motorantriebsgehäuse (B') montiert wird, und einem Zubehör (A) zum Zerkleinern von Lebensmitteln, das auf das Motorantriebsgehäuse (B) und/oder den Adapter (C) montiert wird, **dadurch gekennzeichnet, dass** das Zubehör (A) zum Zerkleinern von Lebensmitteln einem der Ansprüche 1 bis 14 entspricht.

## Claims

1. Food cutting accessory (A) comprising:
- a rotating primary cutting tool (2),
- at least two fixed interchangeable secondary cutting tools (3; 4; 5),
- a plate (1) comprising a bottom (10) provided with a reception seat (11) of the primary cutting tool (2) that can rotate freely about an axis of rotation (Δ) as well as a cutting window (14) in which one of the secondary cutting tools (3; 4; 5) is arranged, the plate (1) partly defining a working chamber (13) open at the end opposite the bottom (10),
- a lid (6) comprising a chute (68) for introducing the food to be cut located substantially opposite the cutting window (14),
- a casing (8) defining with the plate (1) at least one storage housing (87) for one of the secondary cutting tools (3; 4; 5),
- means (100) for driving in rotation the primary cutting tool (2), **characterised in that** the plate (1) comprises a duct (15) for evacuating the cut food connected to the cutting window (14) and extending outside the working chamber (13) and the casing (8).

2. Food cutting accessory (A) according to claim 1, **characterised in that** the casing (8) has at least one side opening (87a, 87b) for fitting at least one of the secondary cutting tools (3; 4; 5) in the or one of the housings (87).

3. Food cutting accessory (A) according to claim 2, **characterised in that** the or at least one of the secondary cutting tools (3; 4; 5) arranged in the or one of the storage housings (87) has a gripping member (34) extending outside the side opening (87a, 87b).

4. Food cutting accessory (A) according to one of claims 1 to 3, **characterised in that** the casing (8) comprises locking means (91) cooperating with the lid (6).

5. Food cutting accessory (A) according to claim 4, **characterised in that** the lid (6) is locked by bayonet with the casing (8).

6. Food cutting accessory (A) according to claim 5, **characterised in that** tabs (66) from the lid (6) are engaged under locking lugs (92) from the casing (8) when the lid (6) is locked with the casing (8).

7. Food cutting accessory (A) according to claim 6, **characterised in that** the tabs (66) are external, and **in that** the locking lugs (92) are internal.

8. Food cutting accessory (A) according to claim 7, **characterised in that** the plate (1) has an upper edge (69) extending above the locking lugs (92) when the plate (1) is fitted on the casing (8), introduction windows (67a) formed in the upper edge (69) for the passage of the tabs (66), as well as locking windows (67b) extending the introduction windows (67a), the tabs (66) being engaged in the locking windows (67b) when the lid (6) is locked with the casing (8).

9. Food cutting accessory (A) according to one of claims 4 to 8 when dependent on claim 2 or 3, **characterised in that** the plate (1) has at least one stop (99) to retain the or one of the secondary cutting tools (3; 4; 5) arranged in the or one of the storage housings (87) when the lid (6) is in locked position.

10. Food cutting accessory (A) according to one of claims 1 to 9, **characterised in that** the primary cutting tool (2) comprises at least:
- a main cutting stop (23) which is located in a cutting plane (P) substantially perpendicular to the axis of rotation (Δ),
- and a presser bevel (24) which comes from the main cutting stop (23), which is arranged on the side of the secondary cutting tool (3; 4; 5) arranged in the cutting window (14), and which is inclined from the main cutting stop (23) in a direction opposite to the direction of rotation of the primary cutting tool (2), so as to press the cut food against the secondary cutting tool (3; 4; 5) arranged in the cutting window (14).

11. Food cutting accessory (A) according to one of claims 1 to 10, **characterised in that** the secondary cutting tools (3; 4; 5) comprise at least one cutting member (40) which is located opposite the chute (68) and which has at least one cutting stop (41) directed towards the chute (68).

12. Food cutting accessory (A) according to claim 11, **characterised in that** at least one of the secondary cutting tools (3; 4; 5) comprises a first series of cutting members (40) substantially parallel to each other.

13. Food cutting accessory (A) according to claim 12, **characterised in that** at least one of the secondary cutting tools (3; 4; 5) comprises a second series of cutting members (45) substantially parallel to each other, the second series of cutting members (45) defining, with the first series of cutting members (40), a cutting grid.

14. Food cutting accessory (A) according to one of claims 1 to 13, **characterised in that** the casing (8) comprises a base (88) for adaptation on a motorised drive unit (B) and/or on an adapter (C), the drive means (100) being adapted to transmit the rotational movement between the motorised drive unit (B), or the adapter (C), and the primary cutting tool (2).

15. Food preparation household electrical appliance, comprising a motorised drive unit (B, B'), if desired a removable adapter (C) mounted on the motorised drive unit (B'), and a removable food cutting accessory (A) mounted on the motorised drive unit (B) and/or on the adapter (C), **characterised in that** the food cutting accessory (A) is according to one of claims 1 to 14.
